· Europäisches Patentamt

European Patent Office

Office européen des brevets

(19)

(11) Veröffentlichungsnummer: **0 059 857
B1**

(12) **EUROPÄISCHE PATENTSCHRIFT**

(45) Veröffentlichungstag der Patentschrift:
**16.01.85**

(51) Int. Cl.⁴: **F 16 K 11/14**

(21) Anmeldenummer: **82101126.9**

(22) Anmeldetag: **16.02.82**

(54) **Reinigbares Probenentnahmeventil.**

(30) Priorität: **27.02.81 DE 3107429**

(43) Veröffentlichungstag der Anmeldung:
**15.09.82 Patentblatt 82/37**

(45) Bekanntmachung des Hinweises auf die Patenterteilung:
**16.01.85 Patentblatt 85/3**

(84) Benannte Vertragsstaaten:
**AT BE CH DE FR GB IT LI LU NL SE**

(56) Entgegenhaltungen:
**CH - A - 529 310
DE - A - 2 614 540
DE - A - 2 815 575
US - A - 3 981 328**

(73) Patentinhaber: **OTTO TUCHENHAGEN GmbH & Co. KG,
Berliner Strasse 10 Postfach 1140, D-2059 Büchen (DE)**

(72) Erfinder: **Mieth, Hans-Otto, Dipl.-Ing., Rehblöcken 34,
D-2000 Hamburg 67 (DE)**

(74) Vertreter: **Dr. E. Wiegand Dipl.-Ing. W. Niemann Dr. M.
Kohler Dipl.-Ing. J. Glaeser Dr. H.-R. Kressin
Patentanwälte, Königstrasse 28,
D-2000 Hamburg 50 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein reinigbares Probenentnahmenventil zum Einbau in eine Produktleitung nach dem Oberbegriff des Hauptanspruchs.

Die Erfindung ist vor allem für produktführende Anlagen der Getränkemittelindustrie von Bedeutung. Dort ist es beispielsweise notwendig, zur Überwachung und Kontrolle des verfahrenstechnischen Ablaufs sterile Proben aus Produktleitungen zu entnehmen.

Aufgrund des innerbetrieblichen Standes der Technik ist bekannt, das Gehäuse eines Probenentnahmeventils in die Produktleitung einzuschweissen, um dieses dadurch voll in die Leitung zu integrieren. Zur Entnahme der Proben verfügt das Ventilgehäuse über eine Öffnung, die mittels eines metallisch dichtenden Schliessgliedes verscchlossen werden kann.

Die Betätigung des Schliessgliedes erfolgt von der Oberseite des Probenentnahmenventils mittels einer quer durch den Produktraum hindurchgehenden, über ein Stopfbuchsengehäuse aus dem Ventilgehäuse herausgeführten Ventilstange, die somit vom Produkt und dem Reinigungsmedium innerhalb des Ventilgehäuses umspült wird. Der Ventilsitz ist metallisch dichtend und damit voll abflammbar.

Eine sterile Probenentnahme ist mit dem bekannten Ventil nur dann möglich, wenn vor der Probenentnahme der Probenauslauf bei geöffnetem Probenentnahmeventil über die mit Reinigungsmittel gefüllte Produktleitung gereinigt und anschliessend abgeflammt wurde.

Mit dem bekannten Probenentnahmeventil ist daher einerseits mehrmaliges Probenziehen während einer Produktfahrt unter sterilen Bedingungen nicht möglich. Obwohl das bekannte Ventil über eine Sichtlaterne zwischen Ventilgehäuse und -antrieb verfügt, bietet es andererseits, wie grundsätzlich alle derart ausgestalteten anderen bekannten Ventile, aus einem zweiten Grund keinen absoluten Schutz gegen Reinfektion, da die Ventilstange beim Schalten des Ventils das ihr anhaftende Produkt in den Stopfbuchsenbereich innerhalb des Ventilgehäuses transportiert. Die derart verschleppten Produktreste entziehen sich in der Regel der automatischen Durchlaufreinigung aus der Produktleitung und stellen somit mindestens eine denkbare Reinfektionsquelle dar.

Aus der CH-A Nr. 529310 ist darüber hinaus eine Ventilvorrichtung bekannt, mit der es möglich ist, eine Einlassleitung wahlweise mit einer Auslassleitung derart zu verbinden, dass der Zwischenraum zwischen den zwei Ventiltellern einerseits zur Einlass- und andererseits zur Auslassleitung hin abgedichtet ausgebildet und mit einer Hilfseinlass- und einer Hilfsausleitung für eine Waschflüssigkeit und/oder ein Sterilisierungsmedium verbunden ist. Mit dieser Ventilvorrichtung wäre bei geeigneter räumlicher Anordnung über die vom kleineren Ventilteller gesteuerte Öffnung allerdings nur eine einmalige, nicht jedoch mehrmalige Probenentnahme während einer Produktfahrt unter sterilen Bedingungen möglich, da der Sitzbereich des kleineren Ventiltellers in der Schliess- oder auch Reinigungsstellung der Ventilvorrichtung von der über die Hilfseinlassleitung zugeführten Waschflüssigkeit und/oder dem Sterilisierungsmedium nicht erreicht werden kann. Eine Reinigung der mit dem grösseren Ventilteller verbundenen Ventilstange von Produktresten, die in den Stopfbuchsenbereich verschleppt wurden, ist zwar gegeben; jedoch steht mit den vorgenannten positiven Merkmalen ein voll funktionsfähiges und unter schwierigen Betriebsbedingungen steril arbeitendes Probenentnahmeventil insgesamt nicht zur Verfügung.

Der Erfindung liegt die Aufgabe zugrunde, ein reinigbares Probenentnahmeventil zu schaffen, welches ein mehrmaliges Probentnehmen während einer zeitlich ausgedehnten Produktfahrt unter optimalen sterilen Bedingungen erlaubt und bei dem ausserdem die Gefahr der Produktverschleppung in den Dichtungsbereich der Stopfbuchse und damit die Gefahr der von diesem Bereich ausgehenden Reinfektion ausgeschlossen ist.

Diese Aufgabe wird durch die Merkmale nach dem Kennzeichen des Hauptanspruchs gelöst.

Das vorgeschlagene Probenenthahmeventil zeichnet sich durch die nachfolgend genannten Vorteile aus. Sämtliche durch das erste Schliessglied vom Produktraum getrennten inneren Ventilflächen sind beispielsweise im Gegensatz zur Ventilvorrichtung gemäss CH-A Nr. 529310 während der Produktfahrt in der Produktleitung beliebig oft durch Zufuhr von Reinigungs- oder Desinfektionsmittel über die Anschlussöffnung im Feder- und Stopfbuchsengehäuse reinigbar. Das erste Schliessglied wird darüber hinaus bei jeder Probenentnahme in das gereinigte Feder- und Stopfbuchsengehäuse gefahren, so dass eine Keimverschleppung aus diesem in den Produktraum ausgeschlossen ist. Eine Keimverschleppung durch die Ventilstange in deren Dichtungsbereich ist ebenfalls ausgeschlossen, da bei der Probenentnahme die die Ventilstange aufnehmende Zylinderbohrung innerhalb des ersten Schliessgliedes mittels des zweiten Schliessgliedes vom Produktraum dicht abgetrennt wird. Sollte dennoch bei geöffnetem Probenentnahmeventil Produkt an die in ihrer oberen Hublage befindliche Ventilstange gelangen, so verbleiben die Produktmittelreste bei der anschliessenden Schliessbewegung des Probenentnahmeventils zunächst innerhalb der Zylinderbohrung des ersten Schliessgliedes, sie werden nicht in den Dichtungsbereich der Ventilstange transportiert, um dann bei der anschliessenden Reinigung abgereinigt und über den Probenauslauf abgeführt zu werden.

Es ist weiterhin zweckmässig, die Schliessbewegung des ersten Schliessgliedes dadurch zu erreichen, dass dessen im Feder- und Stopfbuchsengehäuse endende stirnseitige Begrenzungsfläche von einer Spiraldruckfeder unmittelbar beaufschlagt wird und dass der Öffnungshub des ersten Schliessgliedes durch Anschlag desselben an der inneren Nabe des Feder- und Stopfbuchsengehäuses oder mittelbar über das zweite Schliessglied am Ventilgehäuse bzw. an mit diesem fest verbundenen Bauteilen begrenzt wird. Die Feder und die stirnseitige Begrenzungsfläche liegen dadurch im Reinigungsbereich.

Darüber hinaus sollen Weiterbildungen der erfindungsgemässen Probenentnahmeventils zum einen eine räumliche Trennung des Ventilgehäuses von seinem Antriebsgehäuse sicherstellen und zum anderen unter allen Umständen, selbst bei Fehlschaltung des Reinigungs- oder Desinfektionsmittels, eine Vermischung des Produkts oder der Produktprobe mit letzeren verhindern.

Die räumliche Trennung des Ventilgehäuses von seinem Antriebsgehäuse wird nach einer vorteilhaften Weiterbildung des Probenentnahmeventils dadurch erreicht, dass das dem Feder- und Stopfbuchsengehäuse zugewandte Ende des ersten Schliessgliedes mit einem Kolbenschieber abgedichtet verbunden ist, welcher, über seine äussere Mantelfläche innerhalb des Feder- und Stopfbuchsengehäuses axial geführt, gleichfalls gegen letzeres abgedichtet ist und über seine mittige Kolbenschieberbohrung eine Verbindung zwischen der Zylinderbohrung und dem Innenraum des Feder- und Stopfbuchsengehäuses herstellt, dass die Ventilstange mit dem Feder- und Stopfbuchsengehäuse starr und gegen dessen Umgebung dicht verbunden ist und dass die Ventilstange mit einem Antrieb in Verbindung steht, welcher über ein das Feder- und Stopfbuchsengehäuse umschliessendes Laternengehäuse mit dem Ventilgehäuse verbunden ist.

Die sichtbare Trennung von Ventil- und Antriebsgehäuse über ein zwischengeschaltetes Laternengehäuse ermöglicht gegebenenfalls ein frühzeitiges Erkennen von Leckagen sowohl aus dem Ventilgehäuse als auch aus dem Feder- und Stopfbuchsengehäuse.

Eine Vermischung des Produkts oder der Produktprobe mit Reinigungs- oder Desinfektionsmittel wird bei einem durch ein Laternengehäuse in Ventil- und Antriebsgehäuse räumlich getrennten Probenentnahmeventil dadurch mit Sicherheit verhindert, dass nach einer weiteren vorteilhaften Weiterbildung des Probenentnahmeventils der Kolbenschieber mindestens eine seine äussere Mantelfläche durchdringende, oberhalb der Kolbenschieberdichtung angeordnete Entlastungsbohrung besitzt, welche zum Innenraum des Feder- und Stopfbuchsengehäuses führt, wobei in der Offenstellung (Probenentnahmestellung) des Probenentnahmeventils die Entlastungsbohrung eine Verbindung des Innenraums des Feder- und Stopfbuchsengehäuses mit der Atmosphäre herstellt und eine untere Ventilstangendichtung einen zwischen der Ventilstange und der Kolbenschieberbohrung gebildeten Steuerspalt, welcher den Innenraum des Feder- und Stopfbuchsengehäuses mit der Zylinderbohrung verbindet, verschliesst.

Selbst bei einer Beschädigung der Sitzfläche, die sich zwischen den Schliessgliedern befindet, kann in der Offenstellung des Probenentnahmeventils und bei unter Druck im Feder- und Stopfbuchsengehäuse anstehendem Reinigungs- oder Desinfektionsmittel keine Vermischung feindlicher Medien über die schadhafte Sitzfläche eintreten, da die zur beschädigten Sitzfläche führende Zylinderbohrung an ihrem Eintritt, nämlich dem Steuerspalt zwischen der Ventilstange und der Kolbenschieberbohrung, verschlossen ist. In der beschriebenen Offenstellung ist der Innenraum des Feder- und Stopfbuchsengehäuses gleichzeitig über eine Entlastungsbohrung bzw. über mehrere Entlastungsbohrungen mit der Atmosphäre verbunden. Das gegebenenfalls fehlgeschaltete Reinigungs- oder Desinfektionsmittel kann auf diesem Weg das Feder- und Stopfbuchsengehäuse verlassen.

Um eindeutige Druck- und Strömungsverhältnisse in allen Ventilstellungen zwischen den definierten Endlagen unter allen Umständen innerhalb der gesamten Ventilanordnung auch bei Fehlschaltung des Reinigungs- oder Desinfektionsmittels mit grösstmöglicher Sicherheit zu gewährleisten, ist nach einer weiteren vorteilhaften Ausgestaltung des Probenentnahmeventils vorgesehen, dass der zur Herstellung einer Verbindung zwischen dem Innenraum des Feder- und Stopfbuchsengehäuses mit der Atmosphäre notwendige relative Hubweg c zwischen Kolbenschieber und Feder- und Stopfbuchsengehäuse kleiner ist als der zum Verschliessen des Steuerspaltes durch die untere Ventilstangendichtung notwendige relative Hubweg a zwischen Ventilstange und Kolbenschieber, und dass der maximale relative Hubweg b zwischen Ventilstange und erstem Schliessglied grösser ist als der relative Hubweg a.

Durch die vorstehend bemessenen relativen Hubwege wird zum einen erreicht, dass bei der Öffnungsbewegung des Probenentnahmeventils zunächst die Entlastungsbohrung wirksam wird, bevor der Steuerspalt verschlossen wird und nachfolgend das zweite Schliessglied am ersten Schliessglied zur Anlage kommt, zum anderen ist bei der Schliessbewegung des Probenentnahmeventils sichergestellt, dass die Entlastungsbohrung erst vollständig verschlossen wird, wenn das erste Schliessglied mit voller Schliesskraft auf seiner Sitzfläche aufliegt und nachdem zuvor der Steuerspalt vollständig geöffnet wurde.

Eine weitere vorteilhafte Ausgestaltung des Probenentnahmeventils sieht vor, dass eine auf ihrem Umfang im unteren Bereich Ausnehmungen aufweisende Kolbenschieberbohrung die untere Ventilstangendichtung in der Schliessstellung des Probenenthameventils kraftschlüssig umschliesst und dass das auf seinem unteren Ende über seinen inneren Umfang verteilte Ausnehmungen aufweisende Feder- und Stopfbuchsengehäuse in der Offenstellung des Probenentnahmeventils die obere Kolbenschieberdichtung kraftschlüssig umschliesst.

Durch diese Massnahme wird verhindert, dass die Dichtung, die sich in der gegebenen Ventilstellung nicht im abdichtenden Eingriff befindet, in radialer Richtung betrachtet nach aussen vollständig freiliegt, da sie durch die teilweise kraftschlüssige Umschliessung in ihrer jeweiligen Nut einwandfrei fixiert wird. Beschädigungen der Dichtung durch Abscherung werden somit weitestgehend ausgeschlossen.

Soll die Probenentnahme aus der Produktleitung automatisiert werden, so kann die Hubbewegung der Ventilstange des erfindungsgemässen Probenentnahmeventils über an sich bekannte, druckmittelbetätigte oder motorisch angetriebene Hubeinrichtungen erzeugt werden.

Im folgenden wird das reinigbare Probenentnahmeventil anhand von zwei Ausführungsbeispielen unter Bezugnahme auf die Zeichnung näher erläutert.

Es zeigen:

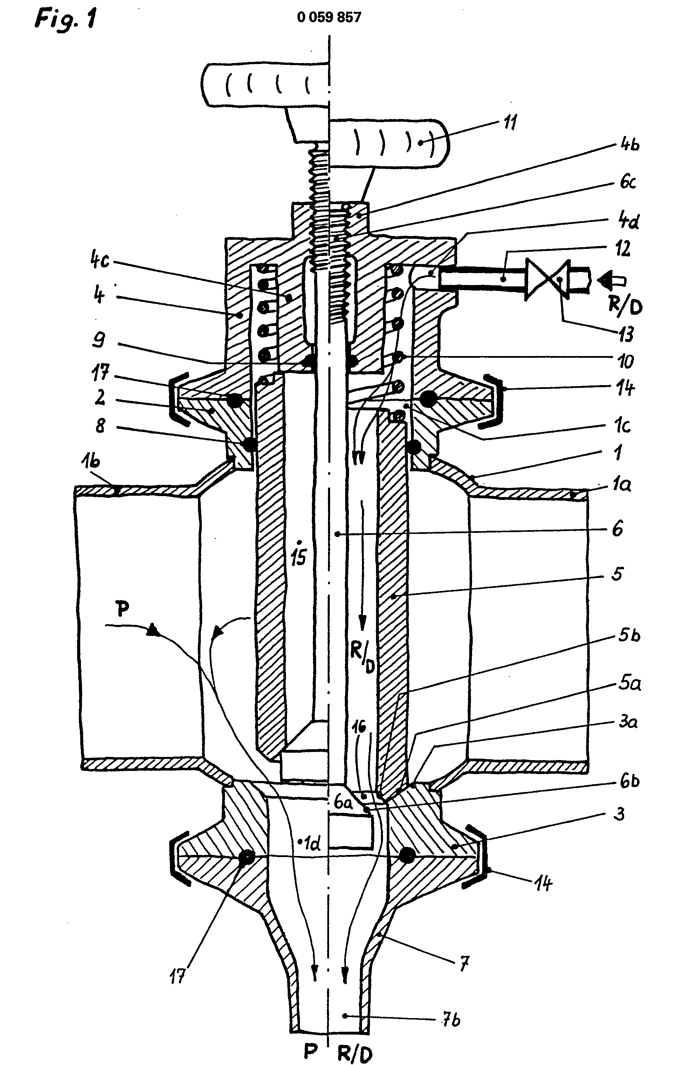

Fig. 1 einen Mittelschnitt durch das reinigbare Probenentnahmeventil gemäss der Erfindung, wobei die links von der Mittellinie angeordnete Darstellung das Probenentnahmeventil in seiner Offen- oder auch Probenentnahmestellung und die rechts von der Mittellinie angeordnete Darstellung das Probenentnahmeventil in seiner Schliess- oder auch Reinigungsstellung zeigen;

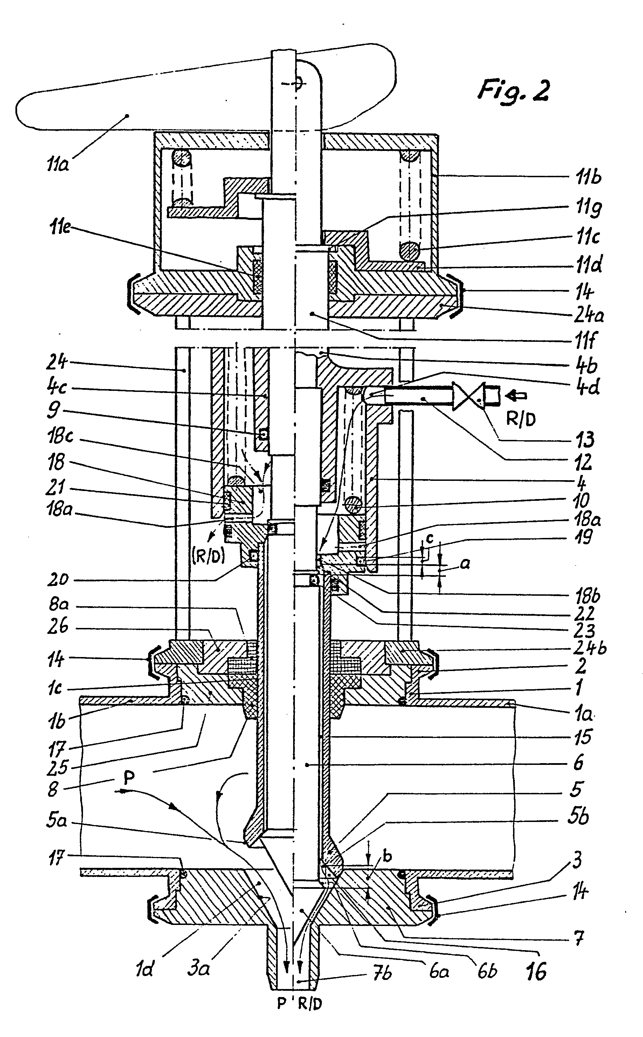

Fig. 2 einen Mittelschnitt durch eine Weiterbildung des reinigbaren Probenentnahmeventils gemäss der Erfindung, wobei die links von der Mittellinie angeordnete Darstellung das Probenentnahmeventil in seiner Offen- oder auch Probenentnahmestellung und die rechts von der Mittellinie angeordnete Darstellung das Probenentnahmeventil in seiner Schliess- oder auch Reinigungsstellung zeigen.

Nach Fig. 1 besteht das reinigbare Probenentnahmeventil gehäuseseitig vorzugsweise aus einem kugelförmigen Ventilgehäuse 1 mit seinen Rohranschlussstutzen 1a, 1b, einem oberen Gehäuseflansch 2 und einem Probenabzweigflansch 3, wobei die beiden letzten axial fluchtend und diametral einander gegenüberliegend mit dem Ventilgehäuse 1 verbunden sind, einem mit dem oberen Gehäuseflansch 2 mittels Verbindungsmittel 14 verbundenen Feder- und Stopfbuchsengehäuse 4 und einem mit dem Probenabzweigflansch 3 mittels Verbindungsmittel 14 verbundenen Probenablaufteil 7. Eine obere und eine untere Flanschverbindung sind jeweils mit einem Dichtring 17 versehen, wobei der untere gegebenenfalls so beschaffen sein muss, dass ein Abflammen des Probenablaufventils 7 möglich ist.

Innerhalb des Ventilgehäuses 1 ist ein hohlzylinderförmiges erstes Schliessglied 5 angeordnet, welches in einer Verbindungsbohrung 1c zum Feder- und Stopfbuchsengehäuse 4 in Hubrichtung geführt und gegen den Innenraum des Ventilgehäuses 1 über eine Gehäusedichtung 8 abgedichtet ist. Die dem Probenabzweigflansch 3 zugewandte stirnseitige Begrenzungsfläche des Schliessgliedes 5 ist mit einer äusseren und einer inneren Sitzfläche 5a, 5b versehen, wobei die erstgenannte mit einer Sitzfläche 3a des Probenabzweigflansches 3 und die andere mit einer Sitzfläche 6b eines zweiten Schliessgliedes 6a korrespondiert. Das Schliessglied 6a ist im Anschluss an die stirnseitige Begrenzungsfläche des Schliessgliedes 5 angeordnet und mit einer Ventilstange 6, die eine Zylinderbohrung 15 des Schliessgliedes 5 konzentrisch durchdringt, verbunden und findet in der Schliessstellung des Probenentnahmeventils im wesentlichen innerhalb einer Probenbohrung 1d des Probenabzweigflansches 3, welche über einen Probenauslauf 7b innerhalb des Probenablaufteils 7 seine Fortsetzung findet, Aufnahme.

Die Ventilstange 6 ist an ihrem dem Schliessglied 6a abgewandten Ende innerhalb einer inneren Nabe 4c aus dem Feder- und Stopfbuchsengehäuse 4 herausgeführt. Ihre Abdichtung erfolgt über eine Ventilstangendichtung 9. Oberhalb der Abdichtungsstelle weist die Ventilstange 6 ein Gewindeteil 6c auf, welches in eine mit dem gleichen Gewinde versehene äussere Nabe 4b eingeschraubt ist. Als Ventilstangenantrieb dient ein Handrad 11. Innerhalb des Feder- und Stopfbuchengehäuses 4 befindet sich eine Feder 10, welche sich einerseits gegen den Boden des Feder- und Stopfbuchsengehäuses 4 und andererseits gegen die stirnseitige Begrenzungsfläche des im Feder- und Stopfbuchsengehäuse 4 endenden Schliessgliedes 5 abstützt. Das Feder- und Stopfbuchsengehäuse 4 ist unmittelbar unter seinem Bodenteil mit einer Anschlussöffnung 4d für Reinigungs- und Desinfektionsmittel versehen, welche mit einer mit einem Absperrorgan 13 ausgestatteten Leitung 12 in Verbindung steht.

Die rechts von der Mittellinie des Probenentnahmeventils angeordnete Darstellung zeigt die Schliess- oder auch Reinigungsstellung des Probenentnahmeventils. In dieser Stellung ist die Ventilstange 6 bis zu ihrem Anschlage an Handrad 11 in das Probenentnahmeventil hineingeschraubt. Zwischen dem auf der Sitzfläche 3a des Probenabzweigflansches 3 mit seiner äusseren Sitzfläche 5 aufliegenden Schliessglied 5 und der Sitzfläche 6b des Schliessgliedes 6a befindet sich ein Ringspalt 16, der auf der Seite des Schliessgliedes 5 durch die innere Sitzfläche 5b begrenzt wird und der sich unterhalb zwischen der Probenbohrung 1d und der im wesentlichen zylinderförmigen Mantelfläche des Schliessgliedes 6a fortsetzt. Das Reinigungs- oder Desinfektionsmittel R bzw. D gelangt bei geöffnetem Absperrorgan 13 über die Leitung 12 und die Anschlussöffnung 4d in das Feder- und Stopfbuchsengehäuse 4, um von dort über die Zylinderbohrung 15 innerhalb des Schliessgliedes 5 und den Ringspalt 16 in die Probenbohrung 1d zu gelangen. Die vorzugsweise diesem Bereich anhaftenden Produktrückstände werden abgereinigt und gelangen über den Probenauslauf 7b in den Aussenbereich des Probenentnahmeventils.

Die Probenentnahme erfolgt durch Hochdrehen der Ventilstange 6, wobei zunächst das Schliessglied 6a mit seiner Sitzfläche 6b an der inneren Sitzfläche 5b des Schliessgliedes 5 zur Anlage kommt. Bei der weiteren Aufwärtsbewegung des Schliessgliedes 6a wird das Schliessglied 5 gegen die Kaft der Feder 10 ebenfalls in seine Offenstellung überführt. Die obere Hublage des Schliessgliedes 5 wird dabei durch die innere Nabe 4c des Feder- und Stopfbuchsengehäuses 4, an welchem die stirnseitige Begrenzungsfläche des Schliessgliedes 5 zur Anlage kommt, begrenzt. Das Produkt P gelangt nunmehr aus dem Ventilgehäuse 1 über den Ringspalt zwischen der Sitzfläche 3a des Probenabzweigflansches 3 und der äusseren Sitzfläche 5a des Schliessgliedes 5 in den Probenauslauf 7b. Ein Übertritt von Produkt P in die Zylinderbohrung 15 ist nicht möglich, da das Schliessglied 6a diesen Bereich mit seiner auf der inneren Sitzfläche 5b des Schliessgliedes 5 aufliegenden Sitzfläche 6b gegen den Produktraum dicht verschliesst. Eine Reinfektion des Produktraumes bei der anschliessenden Schliessbewegung des Schliessgliedes 5 ist ausgeschlossen, da dieses bei der Öffnungsbewegung im Zuge des Probenentnahme in das gereinigte Feder- und Stopfbuchsengehäuse 4 eingefahren wurde.

Eine vorteilhafte Weiterbildung des Probenentnahmeventils ist in Fig. 2 dargestellt. Sämtliche Bauteile dieses Probenentnahmeventils, die sich auf Grund ihrer Anordnung und ihrer prinzipiellen Funktion bei dem bereits beschriebenen Probenentnahmeventil gemäss Fig. 1 wiederfinden, tragen die gleichen Bezugszeichen und Bezeichnungen wie die Bauteile des Probenentnahmeventils gemäss Fig. 1. Dies trifft insbesondere auf folgende Bauteile zu: das Ventilgehäuse 1, die Rohranschlussstutzen 1a und 1b, die Probenbohrung 1d, der obere Gehäuseflansch 2, der Probenabzweigflansch 3, das Schliessglied 5 mit der äusseren Sitzfläche 5a und der inneren Sitzfläche 5b, die Ventilstange 6 mit dem Schliessglied 6a und der Sitzfläche 6b, das Probenablaufteil 7 mit dem Probenauslauf 7b, die Leitung 12 für Reinigungs- und Desinfektionsmittel, das Absperrorgan 13, die Verbindungsmittel 14, die Zylinderbohrung 15 und der Ringspalt 16.

Der wesentliche Unterschied des Probenentnahmeventils gemäss Fig. 2 gegenüber jenem der Fig. 1 besteht darin, dass aus dem Ventilgehäuse 1 über eine Gehäusedichtung 8 und ein sich an diese anschliessendes Führungsteil 8a herausgeführte Schliessglied 5 an seinem dem Feder- und Stopfbuchsengehäuse 4 zugewandten Ende mit einem Kolbenschieber 18 abgedichtet verbunden ist, welcher über seine äussere Mantelfläche, innerhalb des Feder- und Stopfbuchsengehäuses 4 axial geführt, gleichfalls gegen letzeres abgedichtet ist und über seine mittige Kolbenschieberbohrung 18b eine Verbindung zwischen der Zylinderbohrung 15 und dem Innenraum des Feder- und Stopfbuchsengehäuses 4 herstellt. Die Abdichtung des Kolbenschiebers 18 innerhalb des Feder- und Stopfbuchsengehäuses 4 erfolgt über eine obere Kolbenschieberdichtung 19; die Abdichtung gegenüber dem Schliessglied 5 wird durch eine untere Kolbenschieberdichtung 20 realisiert. Die einwandfreie Führung des Kolbenschiebers 18 innerhalb des Feder- und Stopfbuchsengehäuses 4 wird durch einen Führungsring 21 gewährleistet. Die Ventilstange 6 ist mit dem Feder- und Stopfbuchsengehäuse 4 starr verbunden, wobei über eine obere Ventilstangendichtung 9 in der inneren Nabe 4c eine Abdichtung des Innenraums des Feder- und Stopfbuchsengehäuses 4 gegen die Atmosphäre erreicht wird. Die Feder 10 stützt sich einerseits gegen den Boden des Feder- und Stopfbuchsengehäuses 4 und andererseits gegen den Kolbenschieber 18 ab. Im oberen Bereich des Feder- und Stopfbuchsengehäuses 4 befindet sich die vorzugsweise tangential in den Innenraum einmündende Anschlussöffnung 4d für Reinigungs- oder Desinfektionsmittel. Im Gegensatz zu dem Probenentnahmeventil gemäss Fig. 1 wird die Gehäusedichtung 8, die über ihre Durchtrittsbohrung 1c das Schliessglied 5 aus dem Ventilgehäuse 1 herausführt, über einen unteren Gehäuseeinsatz 25 in dem Ventilgehäuse 1 gehalten. Dieser untere Gehäuseeinsatz 25 nimmt auch eine Dichtung 17 auf, die in ähnlicher Form auch im Probenablaufteil 7 angeordnet ist und für eine einwandfreie Abdichtung der gehäusefesten Bauteile sorgt.

Das Führungsteil 8a, das über seine Durchtrittsbohrung 1c das Schliessglied 5 aufnimmt, wird in einem oberen Gehäuseeinsatz 26 gehalten, der sowohl im unteren Gehäuseeinsatz 25 als auch in einem unteren Laternengehäuseflansch 24b zentriert ist. Eine mit dem unteren und einem oberen Laternengehäuseflansch 24b, 24a ausgestattete Laterne 24 sorgt für eine räumliche Trennung des Ventilgehäuses 1 mit einem in seinem Aufbau an sich bekannten handbetätigten Antrieb, welcher aus einem Handhebel 11a, einem Antriebsgehäuse 11b, einer oberen Feder 11c, einem Federteller 11d, einem Führungsteil 11e, einer Antriebsstange 11f und einem Bund 11g gesteht. Die Antriebsstange 11f ist über die äussere Nabe 4b des Feder- und Stopfbuchsengehäuses 4 mit letzterem starr verbunden.

Ein zwischen der Kolbenschieberbohrung 18b und der Ventilstange 6 gebildeter ringförmiger Steuerspalt 22 wird in der Offenstellung (Probenentnahmestellung) des Probenentnahmeventils über eine untere Ventilstangendichtung 23 innerhalb der Ventilstange 6 verschlossen. Die Kolbenschieberbohrung 18b erfährt über eine Ausnehmung eine Erweiterung in Richtung des Innenraumes des Feder- und Stopfbuchsengehäuses 4. Entlastungsbohrungen 18a, die die äussere Mantelfläche des Kolbenschiebers 18 oberhalb der Kolbenschieberdichtung 19 durchdringen, sorgen in der Offenstellung des Probenentnahmeventils für eine Verbindung des Innenraums des Feder- und Stopfbuchsengehäuses 4 mit der Atmosphäre.

In der Schliessstellung des Probenentnahmeventils (rechte Darstellung in der Fig. 2) kann das Probenentnahmeventil gereinigt und desinfiziert werden. Das Reinigungs- oder Desinfektionsmittel tritt über das Absperrorgan 13, die Leitung 12 für Reinigungs- und Desinfektionsmittel und die Anschlussöffnung 4d für Reinigungs- und Desinfektionsmittel in den Innenraum des Feder- und Stopfbuchsengehäuses 4 ein, um von hier aus den Steuerspalt 22, die Zylinderbohrung 15, den Ringspalt 16 und den Probenauslauf 7b zu durchströmen. Sämtliche während einer Probenentnahme mit dem Produkt in Berührung kommenden Ventilteile werden somit im Durchlaufverfahren abgereinigt und desinfiziert.

In der Offenstellung (Probenentnahmestellung) des Probenentnahmeventils ist die Zylinderbohrung 15 gegen den Produktraum über das auf der Sitzfläche 6b des Schliessgliedes 6a aufliegende Schliessglied 5 verschlossen. Ausserdem ist die durch den Steuerspalt 22 gebildete Eintrittsöffnung zur Zylinderbohrung 15 über die untere Ventilstangendichtung 23 abgedichtet. Der Innenraum der Feder- und Stopfbuchsengehäuses 4 ist über die Entlastungsbohrungen 18a mit der Atmosphäre verbunden, so dass unter allen Umständen verhindert wird, dass fehlgeschaltetes Reinigungs- oder Desinfektionsmittel unter Druck im Innenraum des Feder- und Stopfbuchsengehäuses 4 ansteht. Selbst bei einer schadhaften Sitzfläche 6b ist durch die Abdichtung über die untere Ventilstangendichtung 23 im Bereich des Steuerspaltes 22 sichergestellt, dass kein Reinigungs- oder Desinfektionsmittel in den Produktraum bzw. in die Probe gelangen kann.

Die in Fig. 2 gekennzeichneten relativen Hubwege a, b, c sind wie folgt definiert: Der relative Hubweg a ist der Weg, den die Oberkante der unteren Ventilstangendichtung 23 zurücklegen muss, um den Steuerspalt 22 gerade zu verschliessen. Der relative Hubweg b ist derjenige maximale Hub, den das Schliessglied 6a aus der Schliessstellung des Probenentnahmeventils zurücklegen muss, um am Schliessglied 5 zur Anlage zu kommen. Der relative Hubweg c ist derjenige Hub, den das Feder- und Stopfbuchsengehäuse 4 und somit auch die Ventilstange 6 aus der Schliessstellung des Probenentnahmeventils zurücklegen müssen, damit die obere Kolbenschieberdichtung 19 innerhalb des Kolbenschiebers 18 gerade eine Verbindung zwischen dem Innenraum des Feder- und Stopfbuchsengehäuses 4 und der Atmosphäre herstellt. Bei einer Bemessung der relativen Hubweg mit b > a > c ist zum einen sichergestellt, dass die Reinigungs- oder Desinfektionsmittelzufuhr über den Steuerspalt 22 abgesperrt wird, bevor die Probenentnahme durch Anheben des Schliessgliedes 5 erfolgen kann, und zum anderen wird erreicht, dass die Entlastungsbohrungen 18a so lange geöffnet bleiben, bis das Schliessglied 5 mit maximaler Kraft auf seiner äusseren Sitzfläche 5a aufliegt.

Es kann durch die Bedingung a > c niemals die Situation eintreten, dass beispielsweise fehlgeschaltetes Reinigungs- oder Desinfektionsmittel unter Druck über den Steuerspalt 22 in die Zylinderbohrung 15 eintritt, weil die Entlastungsbohrungen 18a bereits über das Feder- und Stopfbuchsengehäuse 4 verschlossen sind.

Der Schaltvorgang des nach Fig. 2 beschriebenen Probenentnahmeventils ist ohne weiteres automatisierbar, wenn die Hubbewegung der Ventilstange 6 über an sich bekannte, druckmittelbetätigte oder motorisch angetriebene Hubeinrichtungen erzeugt wird.

### Patentansprüche

1. Reinigbares Probenentnahmeventil zum Einbau in eine Produktleitung, mit einer vom Ventilgehäuse (1) über eine Entnahmebohrung (1d) abzweigenden Entnahmeleitung, zwei die Entnahme über die Entnahmebohrung steuernden, relativ zueinander bewegbaren, auf zugeordnete Sitzflächen arbeitenden Schliessgliedern (5, 6a) und einem Stopfbuchsengehäuse (4), wobei das mit einer Zylinderbohrung (15) versehene erste Schliessglied (5) innerhalb einer der Entnahmebohrung (1d) im Ventilgehäuse (1) gegenüberliegenden Verbindungsbohrung (1c) in Hubrichtung geführt und gegen einen Produktraum des Ventilgehäuses (1) abgedichtet ist, das der Entnahmebohrung abgewandte Ende des ersten Schliessgliedes (5) in das Stopfbuchsengehäuse (4) hineingeführt ist und die Zylinderbohrung (15) eine Verbindung zum Stopfbuchsengehäuse aufweist, einem zweiten Schliessglied (6a), welches im Anschluss an die der Entnahmebohrung zugewandte stirnseitige Begrenzungsfläche des ersten Schliessgliedes (5) angeordnet und mit der die Zylinderbohrung (15) konzentrisch durchdringenden, über das Stopfbuchsengehäuse (4) aus dem Ventilgehäuse herausgeführten Ventilstange (6) verbunden ist und das in der Offenstellung des Entnahmeventils am ersten Schliessglied (5) anliegt und dieses in eine Stellung überführt, in der gleichzeitig die Entnahmeleitung über die Entnahmebohrung mit dem Produktraum verbunden und die Zylinderbohrung (15) von letzeren getrennt ist, und dass in der Schliessstellung des Entnahmeventils sowohl das zweite (6a) als auch das erste Schliessglied (5) auf ihren jeweiligen Sitzflächen aufliegen und dabei im Bereich der Entnahmebohrung einen Hohlraum zwischen sich einschliessen, der einerseits gegenüber der Entnahmeleitung durch das zweite (6a) und andererseits gegenüber dem Produktraum durch das erste Schliessglied (5) getrennt und gleichzeitig mit der Zylinderbohrung (15) verbunden ist und wobei das Stopfbuchsengehäuse (4) eine Anschlussöffnung (4d) für Reinigungs- und Desinfektionsmittel aufweist, dadurch gekennzeichnet, dass über eine Probenentnahmebohrung (1d) Proben aus dem Produktraum abgezweigt werden, dass das der Probenentnahmebohrung (1d) abgewandte Ende des ersten Schliessgliedes (5) innerhalb eines Feder- und Stopfbuchsengehäuses (4) endet und die Zylinderbohrung (15) zu letzterem hin offen ist, dass eine Feder (10) im Feder- und Stopfbuchsengehäuse (4) angeordnet ist, die das erste Schliessglied (5) gegen eine Gehäusesitzfläche (3a) oder eine Sitzfläche (6b) des zweiten Schliessgliedes (6a) vorspannt, wobei die im Feder- und Stopfbuchsengehäuse (4) endende stirnseitige Begrenzungsfläche des ersten Schliessgliedes (5) von der Feder (10) unmittelbar beaufschlagt ist, dass der Öffnungshub des ersten Schliessgliedes (5) an einer inneren Nabe (4c) des Feder- und Stopfbuchsengehäuses (4) oder mittelbar über das zweite Schliessglied (6a) am Ventilgehäuse (1) bzw. an mit diesem fest verbundenen Bauteilen begrenzt ist, und dass das Probenentnahmeventil über eine Schliess- oder auch Reinigungsstellung und eine Offen- oder auch Probenentnahmestellung verfügt, wobei in der Schliessstellung das erste Schliessglied (5) mit seiner äusseren Sitzfläche (5a) auf der Gehäusesitzfläche (3a) aufliegt und das zweite Schliessglied (6a) mit der ihm zugeordneten inneren Sitzfläche (5b) des Schliessgliedes (5) einen die Zylinderbohrung (15) mit der ersten Probenentnahmebohrung (1d) verbindenden Ringspalt (16) bildet, und in der Offenstellung in an sich bekannter Weise das zweite Schliessglied (6a) mit seiner Sitzfläche (6b) an der inneren Sitzfläche (5a) des ersten Schliessgliedes (5) anliegt und letzteres in eine Stellung überführt, in der die Probenentnahmebohrung (1d) mit dem Produktraum verbunden und die Zylinderbohrung (15) von letzterem getrennt ist.

2. Reinigbares Probenentnahmeventil nach Anspruch 1, dadurch gekennzeichnet, dass das dem Feder- und Stopfbuchsengehäuse (4) zugewandte Ende des ersten Schliessgliedes (5) mit einem Kolbenschieber (18) abgedichtet verbunden ist, welcher über seine äussere Mantelfläche, innerhalb des Feder- und Stopfbuchsengehäuses (4) axial geführt, gleichfalls gegen letzteres abgedichtet ist und über seine mittige Kolbenschieberbohrung (18b) eine Verbindung zwischen der Zylinderbohrung (15) und dem Innenraum des Feder- und Stopfbuchsengehäuses (4) herstellt, dass die Ventilstange (6) mit dem Feder- und Stopfbuchsengehäuse (4) starr und gegen dessen Umgebung dicht verbunden ist und dass die Ventilstange (6) mit einem Antrieb (11a bis 11g) in Verbindung steht, welcher über ein das Feder- und Stopfbuchsengehäuse (4) umschliessendes Laternengehäuse (24, 24a, 24b) mit dem Ventilgehäuse (1) verbunden ist.

3. Reinigbares Probenentnahmeventil nach Anspruch 2, dadurch gekennzeichnet, dass der Kolbenschieber (18) mindestens eine seine äussere Mantelfläche durchdringende, oberhalb der Kolbenschieberdichtung (19) angeordnete Entlastungsbohrung (18a) besitzt, welche zum Innenraum des Feder- und Stopfbuchsengehäuses (4) führt, wobei in der Offenstellung (Probenentnahmestellung) des Probenentnahmeventils die Entlastungsbohrung (18a) eine Verbindung des Innenraumes des Feder- und Stopfbuchsengehäuses (4) mit der Atmosphäre herstellt und eine untere Ventilstangendichtung (23) einen zwischen der Ventilstange (6) und der Kolbenschieberbohrung (18b) gebildeten ringförmigen Steuerspalt (22), welcher den Innenraum des Feder- und Stopfbuchsengehäuses (4) mit der Zylinderbohrung (15) verbindet, verschliesst.

4. Reinigbares Probenentnahmeventil nach Anspruch 3, dadurch gekennzeichnet, dass der zur Herstellung einer Verbindung zwischen dem Innenraum des Feder- und Stopfbuchsengehäuses (4) mit der Atmosphäre notwendige relative Hubweg (c) zwischen Kolbenschieber (18) und Feder- und Stopfbuchsengehäuse (4) kleiner ist als der zum Verschliessen des Steuerspaltes (22) durch die untere Ventilstangendichtung (23) notwendige relative Hubweg (a) zwischen Ventilstange (6) und Kolbenschieber (18) und dass der maximale relative Hubweg (b) zwischen Ventilstange (6) und erstem Schliessglied (5) grösser ist als der relative Hubweg (a) (Fig. 2).

5. Reinigbares Probenentnahmeventil nach einem der Ansprüche 4 oder 3, dadurch gekennzeichnet, dass eine auf ihrem Umfang im unteren Bereich Ausnehmungen aufweisende Kolbenschieberbohrung (18b) die untere Ventilstangendichtung (23) in der Schliessstellung des Probenentnahmeventils kraftschlüssig umschliesst und dass das auf seinem unteren Ende über seinen inneren Umfang verteilte, Ausnehmungen aufweisende Feder- und Stopfbuchsengehäuse (4) in der Offenstellung des Probenentnahmeventils die obere Kolbenschieberdichtung (19) kraftschlüssig umschliesst.

## Claims

1. Cleanable valve for taking samples for incorporation into a product line, comprising a sampling duct branching off from the valve housing (1) through a sampling bore (1d), two closing members (5, 6a) which control the sampling through the sampling bore, are adapted for relative movement with respect to each other and operate on associated seats, and a stuffing box housing (4), the first closing member (5) provided with a cylinder bore (15) being guided in the direction of lift within a connecting bore (1c) opposite the sampling bore (1d) in the valve housing (1) and being sealed against a product space of the valve housing (1), the end of the first closing member (5) remote from the sampling bore extending into the stuffing box housing (4) and the cylinder bore (15) having a connection to the stuffing box housing, a second closing member (6a) which is arranged to adjoin the front end boundary surface of the first closing member (5) facing the sampling bore and is connected to the valve stem (6) concentrically penetrating the cylinder bore (15) and extending through the stuffing box housing (4) beyond the valve housing, and which in the open position of the sampling valve rests against the first closing member (5) and transfers the latter to a position in which simultaneously the sampling duct is connected through the sampling bore to the product space and the cylinder bore (15) is separated from the latter, and that in the closed position of the sampling valve both the second closing member (6a) and the first closing member (5) rest on their respective seats and enclose between them a cavity in the region of the sampling bore, which cavity is separated, on the one hand, from the sampling duct by the second closing member (6a) and, on the other hand, from the product space by the first closing member (5) and is at the same time connected to the cylinder bore (15), the stuffing box housing (4) having a connecting opening (4d) for cleaning and disinfecting agent, characterized in that samples are branched off from the product space through a sampling bore (1d), that the end of the first closing member (5) remote from the sampling bore (1d) terminates within a spring and stuffing box housing (4) and the cylinder bore (15) is open towards the latter, that a spring (10) is arranged in the spring and stuffing box housing (4) and prestresses the first closing member (5) against a housing seat (3a) or a seat (6b) of the second closing member (6a), said spring (10) acting directly on the front end boundary surface of the first closing member (5) terminating in the spring and stuffing box housing (4), that the opening lift of the first closing member (5) is limited at an inner hub (4c) of the spring and stuffing box housing (4) or indirectly, through the second closing member (6a), at the valve housing (1) or at structural parts fixedly connected thereto, and that the sampling valve has a closed or cleaning position and an open or sampling position and that, in the closed position, the first closing member (5) rests with its outer seat (5a) on the housing seat (3a) and the second closing member (6a) forms with the associated inner seat (5b) of the closing member (5) an annular clearance (16) connecting the cylinder bore (15) to the first sampling bore (1d) and, in the open position, in a manner known *per se*, the second closing member (6a) rests with its seat (6b) against the inner seat (5a) of the first closing member (5) and transfers the latter to a position in which the sampling bore (1d) is connected to the product space and the cylinder bore (15) is separated from the latter.

2. Cleanable valve for taking samples according to Claim 1, characterized in that the end of the first closing member (5) facing the spring and stuffing box housing (4) is sealedly connected to a piston valve member (18) which, being axially guided, through its outer side wall surface, within the spring and stuffing box housing (4), is also sealed with respect to the latter, said piston valve member (18) through its central bore (18b), establishing a connection between the cylinder bore (15) and the interior of the spring and stuffing box housing (4), that the valve stem (6) is rigidly connected to the spring and stuffing box housing (4) and sealed with respect to the surroundings of the latter, and that the valve stem (6) is in connection with actuator means (11a to 11g), said actuator means being connected through a lantern housing (24, 24a, 24b) surrounding the spring and stuffing box housing (4) to the valve housing (1).

3. Cleanable valve for taking samples according to Claim 2, characterized in that the piston valve member (18) has at least one relief bore (18a) penetrating the side wall thereof and arranged above the piston valve seal (19), said relief bore (18a) leading to the interior of the spring and stuffing box housing (4) and in the open position (sampling position) of the sampling valve, the relief bore (18a) establishes a connection between the interior of the spring and stuffing box housing (4) and the atmosphere and a lower valve stem seal (23) closes an annular controlling clearance (22) formed between the valve stem (6) and the piston valve bore (18b) and connecting the interior of the spring and stuffing box housing (4) with the cylinder bore (15).

4. Cleanable valve for taking samples according to Claim 3, characterized in that the relative lift displacement (c) between the piston valve member (18) and the spring and stuffing box housing (4) that is necessary to establish a connection between the spring and stuffing box housing (4) and the atmosphere is smaller than the relative lift displacement (a) between the valve stem (6) and the piston valve member (18) that is necessary for closing the controlling clearance (22) by the lower valve stem seal (23), and that the maximum relative lift displacement (b) between the valve stem (6) and the first closing member (5) is greater than the relative lift displacement (a) (Fig. 2).

5. Cleanable valve for taking samples according to any one of Claims 4 or 3, characterized in that in the closed position of the sampling valve a piston valve bore (18b) having recesses on its circumference in the lower portion thereof surrounds the lower valve stem seal (23) in pressure-locking contact therewith and that in the open position of the sampling valve the spring and stuffing box housing (4) being provided at its lower end with recesses distributed over its inner circumference surrounds the upper piston valve seal (19) in pressure-locking contact therewith.

## Revendications

1. Soupape nettoyable pour prélèvement d'échantillons, destinée à être incorporée dans un conduit d'alimentation d'un produit, qui comprend: un conduit de prélèvement partant du boîtier de soupape (1) par l'intermédiaire d'un perçage de prélèvement (1d), deux éléments de fermeture (5, 6a) commandant le prélèvement par le perçage de prélèvement, ces éléments étant relativement mobiles l'un par rapport à l'autre et fonctionnant sur des surfaces de siège correspondantes; une boîte à bourrage (4), le premier élément de fermeture (5), pourvu d'un perçage cylindrique (15), étant guidé dans le sens de la course d'élévation à l'intérieur d'un perçage de communication (1c) situé en regard du perçage de prélèvement (1d) dans le boîtier de soupape (1) et étant séparé de façon étanche d'un espace prévu pour le produit dans le boîtier de soupape (1), l'extrémité, opposée au perçage de prélèvement, du premier élément de fermeture (5) étant guidée en entrant dans la boîte à bourrage (4) et le perçage cylindrique (15) comportant une communication avec la boîte à bourrage; un deuxième élément de fermeture (6a), qui est disposé de manière à se raccorder à la surface de limitation frontale, tournée vers le perçage de prélèvement, du premier élément de fermeture (5) et auquel est reliée la tige de soupape (6), traversant concentriquement le perçage cylindrique (15) et guidée extérieurement en traversant concentriquement le perçage cylindrique (15) à partir du boîtier de soupape par l'intermédiaire de la boîte de bourrage (4) et qui s'applique, dans la position d'ouverture de la soupape de prélèvement, contre le premier élément de fermeture (5) et transfère celui-ci dans une position dans laquelle simultanément le conduit de prélèvement est relié à l'espace prévu pour le produit par l'intermédiaire du perçage de prélèvement et le perçage cylindrique (15) est séparé de cet espace, et qui est telle que, dans sa position de fermeture de soupape de prélèvement, aussi bien le deuxième élément de fermeture (6a) que le premier (5) s'appliquent contre leurs surfaces de siège correspondantes et enferment alors entre eux, dans la région du perçage de prélèvement, un espace creux qui est séparé, d'une part, du conduit de prélèvement par le deuxième élément de fermeture (6a) et, d'autre part, de l'espace prévu pour le produit par le premier élément de fermeture (5) et est en même temps relié au perçage cylindrique (15), la boîte à bourrage (4) comportant une ouverture de raccordement (4d) pour introduire les produits de nettoyage et de désinfection, ladite soupape étant caractérisée en ce que des échantillons sont extraits de l'espace prévu pour le produit par l'intermédiaire d'un perçage de prélèvement d'échantillons (1d), en ce que l'extrémité, éloignée du perçage de prélèvement d'échantillons (1d), du premier élément de fermeture (5) se termine à l'intérieur d'une boîte à ressort et à bourrage (4), le perçage cylindrique (15) étant ouvert vers cette dernière, en ce qu'un ressort (10) est disposé dans la boîte (4) à ressort et bourrage, qui précontraint le premier élément de fermeture (5) contre une surface de siège de boîtier (3a) ou une surface de siège (6d) du deuxième élément de fermeture (6a), la surface de limitation frontale, se terminant par la boîte (4) à ressort et bourrage, du premier élément de fermeture (5), étant directement sollicitée par le ressort (10), en ce que la course de soulèvement d'ouverture du premier élément de fermeture (5) est limitée par un moyen intérieur (4c) de la boîte à ressort et à bourrage (4) ou indirectement par l'intermédiaire du deuxième élément de fermeture (6a) contre le boîtier de soupape (1) ou contre des parties de structure qui lui sont solidairement rattachées, et en ce que la soupape de prélèvement d'échantillons comporte une position de fermeture et aussi de nettoyage et une position d'ouverture et aussi de prélèvement d'échantillons, le premier élément de fermeture (5) s'appliquant, dans la position de fermeture, par sa surface de siège extérieure (5a) contre la surface de siège (3a) du boîtier, et le deuxième élément de fermeture (6a) formant, avec la surface de siège intérieure (5b) correspondante de l'élément de fermeture (5), une fente annulaire (16) reliant le perçage cylindrique (15) avec le premier perçage de prélèvement d'échantillons (1d) et appliquant dans la position d'ouverture, d'une manière connue en soi, le deuxième élément de fermeture (6a) par sa surface de siège (6b) contre la surface de siège intérieure (5a) du premier élément de fermeture (5) et transférant ce dernier dans une position dans laquelle le perçage de prélèvement d'échantillons (1d) est relié à l'espace prévu pour le produit et le perçage cylindrique (15) est séparé de ce dernier.

2. Soupape nettoyable pour prélèvement d'échantillons selon la revendication 1, caractérisée en ce que l'extrémité, tournée vers la boîte (4) à ressort et à bourrage du premier élément de fermeture, est close de façon étanche par un piston-poussoir (18), qui est guidé dans le sens axial par sa surface enveloppe extérieure à l'intérieur de la boîte (4) à ressort et à bourrage, et qui est également pourvu de moyens d'étanchéité vis-à-vis de cette dernière et qui établit, par son perçage central (18b) dans le piston-poussoir, une communication entre le perçage cylindrique (15) et le volume intérieur de la boîte (4) à ressort et à bourrage, en ce que la tige de soupape (6) est reliée rigidement à la boîte (4) à ressort et à bourrage et est reliée de façon étanche vis-à-vis de cet entourage et en ce que la tige de soupape (6) est en liaison avec un moyen d'entraînement (11a à 11g) qui est relié, par l'intermédiaire d'un boîtier à lanterneau (24, 24a, 24b) enfermant la boîte (4) à ressort et à bourrage, au boîtier de soupape (1).

3. Soupape nettoyable pour prélèvement d'échantillons selon la revendication 2, caractérisée en ce que le piston-poussoir (18) possède au moins un perçage de décharge (18a), traversant au moins sa surface enveloppe extérieure et disposé au-dessus du joint d'étanchéité (19) du piston-poussoir, ce perçage se raccordant au volume intérieur de la boîte (4) à ressort et à bourrage, le perçage de décharge (18a) établissant une communication, dans la position d'ouverture (position de prélèvement d'échantillon) de la soupape de prélèvement d'échantillon, entre le volume intérieur de la boîte (4) à ressort et à bourrage et l'atmosphère et un joint d'étanchéité inférieur (23) de tige de soupape fermant une fente de commande (22) annulaire, formée entre la tige de soupape (6) et le perçage (18b) dans le piston-poussoir, fente qui relie le volume intérieur de la boîte (4) à ressort et à bourrage avec le perçage cylindrique (15).

4. Soupape nettoyable pour prélèvement d'échantillons selon la revendication 3, caractérisée en ce que la course relative (c), nécessaire à l'établissement d'une communication entre le volume intérieur de la boîte (4) à ressort et à bourrage et l'atmosphère, entre le piston-poussoir (18) et la boîte (4) à ressort et à bourrage est plus petite que la course relative (a) nécessaire à la fermeture de la fente de commande (22) par le joint d'étanchéité (23) de la tige de soupape, entre la tige de soupape et le piston-poussoir (18) et en ce que la course relative maximale (b) entre la tige de soupape (6) et le premier élément de fermeture (5) est plus grand que la course relative (a) (fig. 2).

5. Soupape nettoyable pour prélèvement d'échantillons selon l'une des revendications 4 ou 3, caractérisée en ce qu'un perçage (18b) dans le piston-poussoir, présentant des échancrures dans la région inférieure à sa périphérie, entoure, par l'action des forces appliquées, le joint d'étanchéité inférieur (23) dans la position de fermeture de la soupape de prélèvement d'échantillon et en ce que la boîte (4) à ressort et à bourrage, présentant à son extrémité inférieure et à sa périphérie des échan-

17 · 0 059 857 · 18

crures qui y sont réparties, enferme par l'action des forces appliquées dans la position d'ouverture de la soupape de prélèvement d'échantillon, le joint d'étanchéité supérieur (19) du piston-poussoir.

Fig. 1

0 059 857

0 059 857

*Fig. 2*